# EUROPÄISCHE PATENTSCHRIFT

(11) **EP 1 437 534 B1**
(45) Veröffentlichungstag und Bekanntmachung des Hinweises auf die Patenterteilung: **03.08.2011**
(21) Anmeldenummer: 03029747.7
(22) Anmeldetag: 23.12.2003
(51) Int. Cl.: F16H 63/30, F16H 3/54

(54) **Planetengetriebe mit einer Kupplung und einer Bremse mit gemeinsamen Aktuator**
Planetary transmission with a clutch and a brake with a common actuator
Transmission planétaire avec un embrayage et un frein à actuateur commun

(30) Priorität: 09.01.2003 US 339690
(43) Veröffentlichungstag der Anmeldung: 14.07.2004
(73) Patentinhaber: DEERE & COMPANY, Moline, Illinois 61265-8098 (US)
(72) Erfinder: Stettler Jr., Werner, Cedar Falls IA 50613 (US)
(74) Vertreter: Holst, Sönke

(56) Entgegenhaltungen:
- EP-A- 0 391 215
- US-A- 2 870 655
- US-A- 4 532 827
- US-A- 5 462 147
- US-A- 5 538 482

## Beschreibung

Die Erfindung betrifft ein Getriebe, wie es aus der US 5 462 147, dem Oberbegriff des Anspruchs 1 entsprechend, bekannt ist. Insbesondere betrifft die vorliegende Erfindung ein Planetengetriebe. Im Konkreten betrifft die vorliegende Erfindung einen Mechanismus zur Aktivierung einer Bremse und/oder eine Kopplung, um ein Planetengetriebe anzusteuern.

Ein herkömmliches Planetengetriebe umfasst Komponenten wie beispielsweise mindestens ein Sonnenrad, mindestens ein Hohlrad und einen Planetenträger, an welchem eine Vielzahl von Planetenrädern drehbar angebracht sind und welche mit dem Hohlrad und/oder mit dem Sonnenrad kämmen. Aus dem Stand der Technik ist bekannt, dass der Eingang und der Ausgang eines Planetengetriebes in vielfältigen Kombinationen mit den Sonnenrädern, dem Planetenträger oder den Hohlrädern verbunden werden können, in Abhängigkeit von der konkret gewünschten Eigenschaft des Getriebes. Das herkömmliche Planetengetriebe wird zwischen unterschiedlichen Getriebeübersetzungsverhältnissen unter Verwendung einer Kupplung geschaltet, um jeweils ein Paar eines der Sonnenräder, des Planetenträgers oder eines der Hohlräder gegen eine relative Rotation zu kuppeln, und/oder unter Verwendung einer Bremse eines der Sonnenräder, des Planetenträgers oder eines der Hohlräder gegen eine relative Rotation zu dem Getriebegehäuse zu bremsen beziehungsweise zu fixieren.

Wenn sowohl eine Kupplung als auch eine Bremse verwendet werden, wird ein gemeinsamer Ansteuermechanismus eingesetzt, welcher üblicherweise einen federvorgespannten hydraulisch betätigbaren Kolben zur Ansteuerung der Bremse und einen separaten federvorgespannten hydraulisch betätigbaren Kolben zur Ansteuerung der Kupplung aufweist. In Abhängigkeit der exakten gewünschten Eigenschaften, können die Federn für die Kolben entweder die entsprechenden Komponenten zum Einrücken oder zum Ausrücken vorspannen, so dass zum Ausrücken oder zum Einrücken der gewünschten Komponente der Kolben mit Hydraulikflüssigkeit beaufschlagt wird.

In den meisten Situationen ist es nicht erwünscht, gleichzeitig die Bremse und die Kupplung komplett einzurücken. Dementsprechend muss der Zeitpunkt der Beaufschlagung der Kolben der zwei Ansteuermechanismen mit Hydraulikflüssigkeit sorgfältig kontrolliert bzw. angesteuert werden, wenn separate federvorgespannte hydraulisch betätigbare Kolben verwendet werden, um die Kupplung und die Bremse anzusteuern. Daher muss die Struktur der Ansteuerventile für diese Flüssigkeiten sehr präzise konstruiert und hergestellt werden, um sicherzustellen, dass das die Wahl des Zeitpunkts der Ansteuerung richtig ist.

Vor kurzem wurde eine Alternative bekannt, bei welcher ein einzelner Kolben zur Ansteuerung der Kupplung und der Bremse verwendet wurde. In solchen Anordnungen ist ein Kolben federvorgespannt um eine der Komponenten (Kupplung oder Bremse) einzurücken und die zweite Komponente auszurücken, und in denen der Kolben hydraulisch aktiviert die erste Komponente ausrückt und die zweite Komponente einrückt, so dass die Bremse und die Kupplung nicht gleichzeitig zusammen vollständig eingerückt sind. Es ist jedoch grundsätzlich notwendig, dass die Kupplung und die Bremse niemals gleichzeitig völlig ausgerückt sind, oder, falls sie es sein müssen, dass beide für eine sehr kurze Zeit ausgerückt sind. In Getrieben der oben beschriebenen Art wird der Ausgang bzw. die Ausgangswelle aufhören zu rotieren, wenn die Kupplung und die Bremse ausgerückt sind und der Ausgang bzw. die Ausgangswelle unter Last steht während Leistung auf den Eingang bzw. auf die Eingangswelle gegeben wird. Dies hat zur Folge, dass die Komponente, mit der die Bremse verbunden ist, mit einer sehr hohen Drehzahl rotiert bzw. dreht. In Abhängigkeit vom Getriebeübersetzungsverhältnis und der Stabilität der Teile kommt es in manchen Fällen unter anderem dazu, dass die mit der Bremse verbundene Komponente (oder daran befestigte rotierende Teile) auf Grund der durch Zentrifugalkräfte hervorgerufene Lasten versagen können.

Daher ist es wünschenswert, dass das Einrückelement mit dem Einrückvorgang beginnt, bevor der Ausrückvorgang des Ausrückelements vollständig abgeschlossenen ist. Eine herkömmliche Vorgehensweise zum Minimieren der Zeitdauer, in der eine Kupplung und eine Bremse gleichzeitig ausgerückt sind, betrifft ein Getriebe, bei welchem sowohl die Kupplung als auch die Bremse von getrennten Kolben eingerückt werden, wobei unter Druck stehende Flüssigkeit dazu verwendet wird, die dem jeweiligen Kolben zugeordnete Kupplung oder Bremse einzurücken. Ein Steuerventil wird von einem Bediener manuell kontrolliert, wodurch das Risiko eingeführt wird, dass das Ventil zu langsam angesteuert wird, wodurch die Möglichkeit eröffnet wird, dass beide Kupplungen gleichzeitig eingerückt oder ausgerückt werden. Um dies zu verhindern, wird ein zweites Ventil verwendet. Das von dem Bediener angesteuerte Ventil steuert nur das zweite Ventil an, welches dann unter Druck stehende Flüssigkeit zur entsprechenden Kupplung oder Bremse leitet. Das zweite Ventil ist in jeder seiner zwei Positionen stark gerastet, so dass es seine Bewegung beziehungsweise Umschaltbewegung sehr schnell vervollständigt, sobald es begonnen hat, sich zu bewegen. Dies dient zum Minimieren aber nicht zum Eliminieren der Zeitdauer, über welche die Kupplung und die Bremse gleichzeitig eingerückt oder ausgerückt sind. Diese Vorgehensweise erfordert zusätzlich die Verwendung mehr als nur einen Kolben, um die Kupplung und die Bremse zu aktivieren.

Eine zweite herkömmliche Vorgehensweise zur Minimierung eines gleichzeitigen Ausrückens einer Kupplung und einer Bremse ist die Verwendung einer Feder, um entweder die Kupplung oder die Bremse einzurücken. Diese über eine Feder eingerückte Kupplung oder Bremse wird mit Hilfe eines Kolbens ausgerückt, welcher mit unter Druck stehender Flüssigkeit aktiviert wird. Die andere Kupplung oder Bremse wird mit Hilfe eines zweiten Kolbens eingerückt, welcher mit unter Druck stehender Flüssigkeit aktiviert wird. Unter Druck stehende Flüssigkeit wird von beiden Kolben gleichzeitig aufgebaut oder abgebaut, wenn Flüssigkeit über ein Ventil beiden Kolben zugeführt wird. Dies ergibt im Wesentlichen einen abhängigen Gleichauf bzw. eine abhängige Synchronisation der Kupplungselemente während des Schaltvorgangs, erfordert jedoch mehrere Kolben und eine sorgfältige bzw. aufwändige Konstruktion der Steuerventile.

Die der Erfindung zugrunde liegende Aufgabe wird darin gesehen, ein Planetengetriebe der eingangs genannten Art anzugeben und weiterzubilden, durch welches die vorgenannten Probleme überwunden werden. Insbesondere soll ein Mechanismus angegeben werden, mit welchem nur die Bremse oder nur die Kupplung des Planetengetriebes zu einer Zeit vollständig aktivierbar ist und der eine vereinfachte Konstruktion darstellt, ohne eigens hierfür vorgesehenen Ventile herstellen zu müssen. Vorzugsweise soll lediglich ein Aktuator vorgesehen sein, mit welchem ein gleichzeitiges Einrücken/Ausrücken der Bremse und der Kupplung möglich ist.

Die Aufgabe wird erfindungsgemäß durch die Lehre des Patentanspruchs gelöst. Weitere vorteilhafte Ausgestaltungen und Weiterbildungen der Erfindung gehen aus den Unteransprüchen 2 bis 9 hervor.

Mit anderen Worten wird insbesondere mit dem unabhängigen Patentanspruch in erfindungsgemäßer Weise ein Planetengetriebe angegeben, welches ein Sonnenrad, ein Hohlrad und einen Planetenträger aufweist, wobei diese Komponenten in einem Getriebegehäuse montiert sind. Eine Vielzahl von Planetenräderverbunde sind drehbar an dem Planetenträger befestigt. Der Planetenträger ist entweder mit einer Eingangswelle oder einer Ausgangswelle verbunden, während das Hohlrad jeweils mit dem anderen Element, also entweder mit der Ausgangswelle oder der Eingangswelle, verbunden ist. Eine Kupplung ist einrückbar und ausrückbar mit dem Sonnenrad zur Rotation bzw. Drehung mit entweder der Eingangswelle oder der Ausgangswelle kuppelbar, mit der auch der Planetenträger gekoppelt ist. Eine Bremse fixiert beziehungsweise bremst einrückbar und ausrückbar das Sonnenrad gegen Drehung bzw. Rotation relativ zum Gehäuse. Ein hydraulisch einrückbarer/federbeaufschlagt ausrückbarer nicht rotierender Aktuator bzw. Kolben ist in dem Gehäuse montiert und ist in Abhängigkeit von unter Druck stehender Flüssigkeit zwischen einer eingerückten Position zum Einrücken entweder der Kupplung oder der Bremse und einer zurückgezogenen Position zum Ausrücken entweder der Kupplung oder der Bremse bewegbar bzw. gleitend angeordnet. Das erfindungsgemäße Getriebe ist in einem ersten Bereich betreibbar, in welchem die Kupplung eingerückt und die Bremse ausgerückt ist, und ist in einem zweiten Bereich betreibbar, in welchem die Bremse eingerückt und die Kupplung ausgerückt ist.

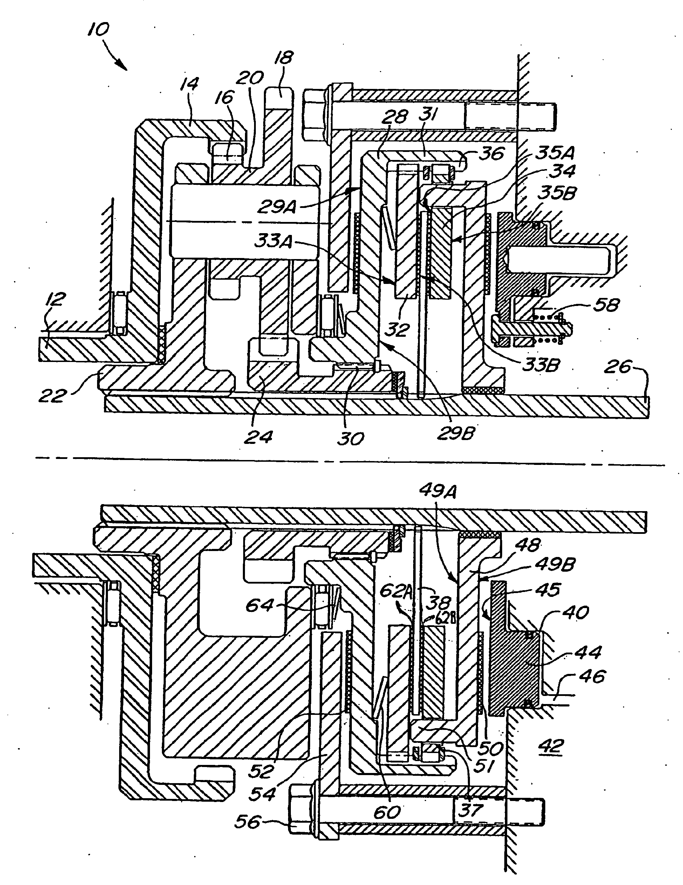

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert. Es zeigt die einzige
- Figur: in einer schematischen Darstellung ein bevorzugtes Ausführungsbeispiel der vorliegenden Erfindung.

Ein Zweigang-Lastschaltgetriebe umfasst einen Planetengetriebesatz, eine Kupplung, eine Bremse, eine Feder, um mit der Bremse oder mit der Kupplung zur Anlage bzw. zum Eingriff zu kommen, ein hydraulisch betätigter Kolben und hierzu zugehörige Elemente zum Ansteuern des Kolbens sowie ein Gehäuse, welches das Getriebe enthält.

In diesem Ausführungsbeispiel wird das Planetengetriebe 10 von einer mit dem Hohlrad 14 verbundenen Eingangswelle 12 angetrieben. Das Hohlrad 14 ist mit einem ersten Planetenrad 16 gekoppelt, welches mit einem zweiten Planetenrad 18 drehfest gekoppelt ist, um eines einer Vielzahl von einem Planetenräderverbund 20 zu bilden. Die Planetenräderverbunde 20 sind drehbar an dem Planetenträger 22 befestigt. Ein Sonnenrad 24 ist mit dem zweiten Planetenrad 18 eines jeden Planetenräderverbunds 20 in herkömmlicher Weise gekoppelt. Ein Drehmoment wird von dem Planetengetriebe 10 auf eine Ausgangswelle 26 übertragen, welche mit dem Planetenträger 22 gekoppelt ist.

Das Sonnenrad 24 umfasst eine Kupplungstrommel 28, welche über eine Verzahnung 30 an das Sonnenrad 24 gekoppelt ist, wobei die Verzahnung 30 in einem in radialer Richtung sich erstreckenden Abschnitt des Sonnenrads 24 vorgesehen ist. Die Kupplungstrommel 28 umfasst erste und zweite Seiten 29A und 29B, wobei eine Reibungsplatte bzw. ein Bremsbelag 52 an der ersten Seite 29A der Kupplungstrommel 28 befestigt ist. Eine Druckplatte 32 und eine Kupplungsbremsplatte 34 sind in einem Trommelabschnitt 31 der Kupplungstrommel 28 mit Hilfe von Verzahnungen 36 befestigt und drehen mit der Kupplungstrommel 28 um die Ausgangswelle 26. Die Kupplungsdruckplatte 32 umfasst erste und zweite Seiten 33A, 33B, die Kupplungsbremsplatte 34 umfasst erste und zweite Seiten 35A, 35B. Die Kupplungsbremsplatte 34 umfasst weiterhin eine Vielzahl von Aperturen 37. Eine Lamellenscheibe bzw. eine Kupplungsscheibe 38 ist zwischen der zweiten Seite 33B der Kupplungsdruckplatte 32 und der ersten Seite 35A der Kupplungsbremsplatte 34 angeordnet und weist eine Verzahnung mit der Ausgangswelle 26 zur Drehung mit der Ausgangswelle 26 auf. Reibscheiben 62A und 62B sind an der zweiten Seite 33B der Kupplungsdruckplatte 32 und an der ersten Seite 35A der Kupplungsbremsplatte 34 befestigt.

Eine Kolbenvertiefung 40 ist in dem Getriebegehäuse 42 ausgebildet und weist einen darin bewegbaren Kolben 44 auf. Der Kolben 44 umfasst eine Planfläche 45, welche außerhalb der Kolbenvertiefung 40 angeordnet ist. Ein Hydraulikflüssigkeitskanal 46 ist in dem Getriebegehäuse 42 vorgesehen und endet in der Kolbenvertiefung 40 hinter dem Kolben 44. Der Flüssigkeitskanal 46 steht mit einer in der Figur nicht gezeigten Flüssigkeitsdruckquelle in Verbindung. Die Kolbenvertiefung 40 kann in herkömmlicher Weise mit unter Druck stehender Hydraulikflüssigkeit beaufschlagt werden oder es kann Hydraulikflüssigkeit aus der Kolbenvertiefung 40 entleert werden, um entweder den Kolben 44 in Richtung der Ausrückplatte 48 zu bewegen oder es zu erlauben, den Kolben 44 weiter in die Kolbenvertiefung 40 sich bewegen zu lassen. Eine Kolbenrückstellfederanordnung 58 ist vorgesehen, um den Kolben 44 in die Kolbenvertiefung 40 einzufahren, wenn der hydraulische Druck in der Kolbenvertiefung 40 abgebaut wird.

Eine erste und zweite Seiten 49A und 49B aufweisende Ausrückplatte 48 ist in dem Getriebegehäuse 42 zwischen der Planfläche 45 des Kolbens 44 und der zweiten Seite 35B der Kupplungsbremsplatte 34 angeordnet. Mehrere Vorsprünge 51 erstrecken sich von der ersten Seite 49A der Ausrückplatte 48 und greifen in die Vielzahl der in der Kupplungsbremsplatte 34 ausgebildeten Aperturen 37 komplementär ein und erstrecken sich durch sie hindurch. Eine Reibscheibe 50 ist an der zweiten Seite 49B der Ausrückplatte 48 befestigt.

Eine Feder 60 zum Betätigen der Kupplung ist zwischen der ersten Seite 33A der Druckplatte 32 und der zweiten Seite 29B der Kupplungstrommel 28 angeordnet. In ähnlicher Weise ist eine Feder 64 zum Zurückstellen der Bremse zwischen der ersten Seite 29A der Kupplungstrommel 28 und dem Planetenträger 22 angeordnet. Die Feder 60 zum Betätigen der Kupplung und die Feder 64 zum Zurückstellen der Bremse sind bevorzugt in Form einer Belleville-Scheibe bzw. einer Tellerfeder ausgeführt.

Der Kolben 44 kann durch das Beaufschlagen von mit unter Druck stehender Hydraulikflüssigkeit in der Kolbenvertiefung 40 aktiviert werden, wodurch die Planfläche 45 des Kolbens 44 zur Anlage bzw. zum Einrücken mit der Reibscheibe 50 der Ausrückplatte 48 kommt. Dies löst gleichzeitig die Anlage der Kupplungsdruckplatte 32 mit der Kupplungsscheibe 38, wenn die Vorsprünge 51 an der zweiten Seite 33B der Kupplungsdruckplatte 32 und bewirken, dass der Bremsbelag 52 mit der Gehäuseerweiterung bzw. mit dem Getriebehals 54 zur Anlage kommt.

In das Getriebe 10 wird Drehmoment auf das Hohlrad 14 hinein gegeben, das Drehmoment wird von dem Planetenträger 22 und von dem Sonnenrad 24, gesteuert von der Kupplung und der Bremse, ausgegeben. Wenn im Betrieb der Kolben 44 nicht mit Hydraulikflüssigkeit druckbeaufschlagt wird, befindet sich der Kolben 44 in seiner von der Rückstellfeder 58 verursachten eingefahrenen bzw. zurückgezogenen Position. In diesem Zustand kommt die Feder 60 zum Betätigen der Kupplung mit der Kupplung zur Anlage, so dass alle Elemente des Planetengetriebesatzes synchron drehen bzw. rotieren, was in einem direkten Antrieb resultiert. Wenn Flüssigkeit in die Kolbenvertiefung 40 fließt, bewegt sich der Kolben 44 vorwärts und kommt mit der Reibscheibe 50 in Kontakt. Wenn der Druck auf den Kolben 44 sich erhöht, wird mehr Kraft auf die Reibscheibe 50 und die Ausrückplatte 48 ausgeübt und vergleichbar weniger Druck wird auf die Reibscheiben 62A, 62B ausgeübt. Wenn der Kolben 44 mit dem vollen Druck beaufschlagt wird, wird die Bremse vollständig eingerückt und die Kupplung vollständig ausgerückt. Wenn die Bremse vollständig eingerückt und die Kupplung vollständig ausgerückt ist, wird das Sonnenrad 24 am Drehen gehindert und der Planetenträger 22 dreht langsamer als das Eingangs-Hohlrad 14. Als Ergebnis der abnehmenden Kupplungskraft um eine im Wesentlichen gleichen Rate, mit welcher die Bremskraft abnimmt, ist zu keiner Zeit sowohl die Kupplung als auch die Bremse entweder völlig eingerückt oder völlig ausgerückt.

Ein Vorteil der vorliegenden Erfindung ist, dass hierdurch eine Möglichkeit eröffnet wird, sicherzustellen, dass die Kupplung und die Bremse gleichzeitig nicht völlig eingerückt oder völlig ausgerückt sind, obwohl lediglich ein Aktuator bzw. ein Kolben benötigt wird. Weil die Kraft, mit welcher die Bremse beaufschlagt wird, auf die Feder 60 übertragen wird, welche die Kupplung beaufschlagt, wird die Kraftbeaufschlagung auf die Reibscheiben 62A, 62B um einen ähnlichen Betrag verringert, was sicherstellt, dass die Kupplung und die Bremse nicht gleichzeitig entweder völlig eingerückt oder völlig ausgerückt sind. Es wird weiterhin sichergestellt, dass die Synchronisation bzw. der Gleichlauf während des Schaltvorgangs gegeben ist. Die Synchronisation bzw. der Gleichlauf ist sehr vergleichbar zu den Systemen, welche ein federbeaufschlagtes/hydraulisch lösbares Kupplungselement und ein hydraulisch beaufschlagtes Kupplungselement verwenden, jedoch mit weniger Teilen und einer geringeren Komplexität.

Ein zweiter Vorteil der vorliegenden Erfindung ist darin zu sehen, dass der eine Kolben 44 in einem nicht rotierenden Gehäuseteil angeordnet ist. Bei einer herkömmlichen Anordnung, bei welcher ein Kupplungskolben in einem rotierenden Gehäuse angeordnet ist, sind Drehdichtungen und eher komplexe Flüssigkeitskanäle erforderlich.

Ein dritter Vorteil der vorliegenden Erfindung liegt in der Tatsache, dass der Kolben 44 nicht rotiert. Wenn das übertragene Drehmoment gering genug ist und die Kupplungs- und Bremskräfte gering genug sind, kann der durch Flüssigkeit aktivierte Kolben mit einer entsprechend ausgebildeten, manuell betätigbaren mechanischen Anordnung ersetzt werden, wodurch die Herstellungskosten und die Komplexität des Getriebes weiter verringert werden könnten.

Die weiteren Elemente des in der Figur gezeigten Planetengetriebes, wie zum Beispiel Lager, Schmiersysteme usw., sind aus dem Stand der Technik bekannt und bedürfen keiner weiteren Erläuterung.

Eine Vielzahl weiterer Möglichkeiten der erfindungsgemäßen Lehre sind denkbar. So wird beispielsweise bei dem in der Figur gezeigten Ausführungsbeispiel das Ausgangsdrehmoment des Hohlrads als Eingangsdrehmoment auf den Planetenträger übertragen und die Bremse und die Kupplung dienen zur Ansteuerung der Rotation des Sonnenrads relativ zum Getriebegehäuse und zu dem Planetenträger. Eine Vielzahl anderer Verbindungen könnten in diesem Zusammenhang vorgesehen sein. In gleicher Weise könnte vorgesehen sein, dass in Abhängigkeit einer speziellen Applikation die federvorgespannte Einrückung der Kupplung und die hydraulische Aktivierung der Eindrückung der Bremse umgekehrt bzw. vertauscht wird.

Auch wenn die Erfindung anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter den Ansprüchen fallen.

## Patentansprüche

1. Planetengetriebe, mit einem Getriebegehäuse (42); einem in dem Getriebegehäuse (42) montierten Sonnenrad (24); einem in dem Getriebegehäuse (42) montierten Hohlrad (14); einem in dem Getriebegehäuse (42) montierten Planetenträger (22); mindestens einem drehbar an dem Planetenträger (22) montierten und mit dem Sonnenrad (24) kämmenden Planetenrad (18); mindestens einem drehbar an dem Planetenträger (22) montierten und mit dem Hohlrad (14) kämmenden Planetenrad (16); einer Bremse, mit welcher wahlweise das Sonnenrad (24), das Hohlrad (14) oder der Planetenträger (22) gegen eine Drehung relativ zum Getriebegehäuse (42) bremsbar ist; einer Kupplung, mit welcher wahlweise von den Elementen (24, 14, 22) bestehend aus dem Sonnenrad (24), dem Hohlrad (14) und dem Planetenträger (22) zwei Elemente (24, 14, 22) aneinander kuppelbar sind, um eine Relativbewegung zwischen den zwei Elementen (24, 14, 22) zu verhindern; und einem Aktuator (40, 44, 46, 58), welcher mit der Bremse und der Kupplung kuppelbar ist, wobei der Aktuator (40, 44, 46, 58) zwischen einer Bremsposition, in welcher die Bremse vollständig eingerückt und die Kupplung vollständig ausgerückt ist, einer Kupplungsposition, in welcher die Kupplung vollständig eingerückt und die Bremse vollständig ausgerückt ist, und einer Vielzahl von dazwischenliegenden Positionen verbringbar ist, in welchen immer zumindest die Kupplung oder die Bremse zumindest teilweise eingerückt ist, **dadurch gekennzeichnet, dass** die Kupplung eine mit dem Sonnenrad (24) drehfest verbundene Kupplungstrommel (28); eine in einem Trommelabschnitt (31) mit der Kupplungstrommel (28) fest verbundene Kupplungsbremsplatte (34) mit einer Vielzahl von Aperturen (37); eine in dem Trommelabschnitt (31) beweglich zur Kupplungstrommel (28) angeordnete Kupplungsdruckplatte (32); eine zwischen der Kupplungsbremsplatte (34) und der Kupplungsdruckplatte (32) angeordnete und drehfest mit der Ausgangswelle (26) verbundene Kupplungsscheibe (38); eine zwischen der Kupplungstrommel (28) und der Kupplungsdruckplatte (32) angeordnete Feder (60) zum Betätigen der Kupplung, um die Kupplungsdruckplatte (32) zur Anlage an der Kupplungsscheibe (38) vorzuspannen; und eine Ausrückplatte (48) mit einer Vielzahl von Vorsprüngen (51) aufweist, welche komplementär in die Vielzahl der Aperturen (37) der Kupplungsbremsplatte (34) einrückbar und hierdurch erstreckbar sind, wobei die Ausrückplatte (48) in dem Getriebegehäuse (42) benachbart zu dem Aktuator (40, 44, 46, 58) derart angeordnet ist, dass mit dem Aktuator (40, 44, 46, 58) gezielt die Ausrückplatte (48) bewegbar ist, um die Kupplungsdruckplatte (32) von der Kupplungsscheibe (38) auszurücken, und dass die Bremse einen an dem Getriebegehäuse (42) starr befestigten und zwischen dem Planetenträger (22) und der Kupplungstrommel (28) angeordneten Getriebehals (54); und eine zwischen dem Planetenträger (22) und der Kupplungstrommel (28) angeordnete Feder (64) zum Rückstellen der Bremse aufweist, wobei die Feder (64) die Kupplungstrommel (28) und die Kupplungsdruckplatte (32) zur Anlage mit der Kupplungsscheibe (38) vorspannt, so dass die Kupplungstrommel (28) zur reibenden Anlage mit dem Getriebehals (54) bewegt wird, wenn der Aktuator (40, 44, 46, 58) die Kupplungsdruckplatte (32) bewegt.

2. Planetengetriebe nach Anspruch 1, **dadurch gekennzeichnet, dass** der Aktuator (40, 44, 46, 58) an dem Getriebegehäuse (42) drehfest angeordnet ist und/oder einen Kolben (44) aufweist.

3. Planetengetriebe nach Anspruch 1 oder 2, **dadurch gekennzeichnet, dass** der Aktuator (40, 44, 46, 58) einen Kolben (44) aufweist, welcher zwischen einer aktivierten Position und einer zurückgezogenen Position verstellbar ist, wobei die Bremse oder die Kupplung in der aktivierten Position vollständig eingerückt ist, und wobei die Bremse oder die Kupplung in der zurückgezogenen Position vollständig ausgerückt ist.

4. Planetengetriebe nach einem der Ansprüche 1 bis 3, **dadurch gekennzeichnet, dass** der Aktuator (40, 44, 46, 58) eine Feder (58) aufweist, welche zum Vorspannen des Kolbens (44) in Richtung seiner zurückgezogenen Position gekoppelt ist.

5. Planetengetriebe nach einem der Ansprüche 1 bis 4, **dadurch gekennzeichnet, dass** der Aktuator (40, 44, 46, 58) einen im Getriebegehäuse (42) ausgebildeten Flüssigkeitskanal (46) aufweist, welcher in Verbindung mit dem Kolben (44) steht, um den Kolben (44) in die aktivierte Position oder in die zurückgezogene Position zu verbringen.

6. Planetengetriebe nach einem der Ansprüche 1 bis 5, **dadurch gekennzeichnet, dass** der Aktuator (40, 44, 46, 58) Mittel zur Steuerung der Versorgung von unter Druck stehender Hydraulikflüssigkeit zu einer Hydraulikkammer (40) aufweist, um den Kolben (44) in die aktivierte Position zu verbringen, und dass der Aktuator (40, 44, 46, 58) Mittel aufweist, mit welchen Hydraulikflüssigkeit aus der Hydraulikkammer (40) ablassbar ist, um den Kolben (44) vorzugsweise von der Feder (58) zum Vorspannen des Kolbens (44) in die zurückgezogene Position zu verbringen.

7. Planetengetriebe nach eine der Ansprüche 1 bis 6, **dadurch gekennzeichnet, dass** die Feder (60) zum Betätigen der Kupplung und/oder die Feder (64) zum Rückstellen der Bremse eine Tellerfeder oder eine Belleville-Scheibe aufweist.

8. Planetengetriebe nach einem der Ansprüche 1 bis 7, **dadurch gekennzeichnet, dass** die Kupplung Reibscheiben (62B, 62A) aufweist, welche an der Kupplungsbremsplatte (34) und an der Kupplungsdruckplatte (32) befestigt sind und welche zur reibenden Anlage an der Kupplungsscheibe (38) dienen.

9. Planetengetriebe nach einem der Ansprüche 1 bis 8, **dadurch gekennzeichnet, dass** die Bremse einen Bremsbelag (52) aufweist, welcher an der Kupplungstrommel (28) befestigt ist und welcher zur reibenden Anlage an dem Getriebehals (54) dient.

## Claims

1. Planetary transmission, with a transmission housing (42); a sun wheel (24) mounted in the transmission housing (42); a ring gear (14) mounted in the transmission housing (42), a planet carrier (22) mounted in the transmission housing (42); at least one planet wheel (18) which is mounted rotatably on the planet carrier (22) and meshes with the sun wheel (24); at least one planet wheel (16) which is mounted rotatably on the planet carrier (22) and meshes with the ring gear (14); a brake with which either the sun wheel (24), the ring gear (14) or the planet carrier (22) can be braked against rotation relative to the transmission housing (42); a clutch with which a choice of two elements (24, 14, 22) of the elements (24, 14, 22) consisting of the sun wheel (24), the ring gear (14) and the planet carrier (22) can be coupled to each other in order to prevent a relative movement between the two elements (24, 14, 22); and an actuator (40, 44, 46, 58) which can be coupled to the brake and to the clutch, wherein the actuator, (40, 44, 46, 58) can be brought between a braking position, in which the brake is fully engaged and the clutch is fully disengaged, a clutch position, in which the clutch is fully engaged and the brake is fully disengaged, and a multiplicity of intermediate positions in which at least the clutch or the brake is always at least partially engaged, **characterized in that** the clutch has a clutch drum (28) connected to the sun wheel (24) for rotation therewith; a clutch brake plate (34) which is connected fixedly to the clutch drum (28) in a drum section (31) and has a multiplicity of apertures (37); a clutch pressure plate (32) arranged in the drum section (31) in a movable manner with respect to the clutch drum (28); a clutch disc (38) which is arranged between the clutch brake plate (34) and the clutch pressure plate (32) and is connected to the output shaft (26) for rotation therewith; a spring (60) which is arranged between the clutch drum (28) and the clutch pressure plate (32) and is intended for actuating the clutch in order to prestress the clutch pressure plate (32) to bear against the clutch disc (38); and a release plate (48) with a multiplicity of projections (51) which are engagable in a complementary manner in the multiplicity of apertures (37) in the clutch brake plate (34) and are extendable therethrough, the release plate (48) being arranged adjacent to the actuator (40, 44, 46, 58) in the transmission housing (42) in such a manner that the release plate (48) is movable in a specific manner by the actuator (40, 44, 46, 58) in order to release the clutch pressure plate (32) from the clutch disc (38), and **in that** the brake has a transmission neck (54) which is fastened rigidly to the transmission housing (42) and is arranged between the planet carrier (22) and the clutch drum (28); and a spring (64) which is arranged between the planet carrier (22) and the clutch drum (28) and is intended for resetting the brake, the spring (64) prestressing the clutch drum (28) and the clutch pressure plate (32) so as to bear against the clutch disc (38) such that the clutch drum (28) is moved for bearing frictionally against the transmission neck (54) when the actuator (40, 44, 46, 58) moves the clutch pressure disc (32).

2. Planetary transmission according to Claim 1, **characterized in that** the actuator (40, 44, 46, 58) is arranged non-rotatably on the transmission housing (42) and/or has a piston (44).

3. Planetary transmission according to Claim 1 or 2, **characterized in that** the actuator (40, 44, 46, 58) has a piston (44) which can be displaced between an activated position and a retracted position, the brake or the clutch being fully engaged in the activated position, and the brake or the clutch being fully disengaged in the retracted position.

4. Planetary transmission according to one of Claims 1 to 3, **characterized in that** the actuator (40, 44, 46, 58) has a spring (58) which is coupled for prestressing the piston (44) in the direction of the retracted position thereof.

5. Planetary transmission according to one of Claims 1 to 4, **characterized in that** the actuator (40, 44, 46, 58) has a fluid duct (46) which is formed in the transmission housing (42) and is connected to the piston (44) in order to bring the piston (44) into the activated position or into the retracted position.

6. Planetary transmission according to one of Claims 1 to 5, **characterized in that** the actuator (40, 44, 46, 58) has means for controlling the supply of pressurized hydraulic fluid to a hydraulic chamber (40) in order to bring the piston (44) into the activated position, and **in that** the actuator (40, 44, 46, 58) has means with which hydraulic fluid can be let out of the hydraulic chamber (40) in order to bring the piston (44) into the retracted position, preferably by means of the spring (58) for prestressing the piston (44).

7. Planetary transmission according to one of Claims 1 to 6, **characterized in that** the spring (60) for actuating the clutch and/or the spring (64) for resetting the brake have/has a disc spring or a Belleville spring washer.

8. Planetary transmission according to one of Claims 1 to 7, **characterized in that** the clutch has friction discs (62B, 62A) which are fastened to the clutch brake plate (34) and to the clutch pressure plate (32) and which serve for bearing frictionally against the clutch disc (38).

9. Planetary transmission according to one of Claims 1 to 8, **characterized in that** the brake has a brake lining (52) which is fastened to the clutch drum (28) and which serves for bearing frictionally against the transmission neck (34).

## Revendications

1. Transmission planétaire comprenant un carter de transmission (42) ; une roue solaire (24) montée dans le carter de transmission (42) ; une couronne (14) montée dans le carter de transmission (42) ; un porte-satellites (22) monté dans le carter de transmission (42) ; au moins un pignon planétaire (18) monté à rotation sur le porte-satellites (22) et s'engrenant avec la roue solaire (24) ; au moins un pignon planétaire (16) monté à rotation sur le porte-satellites (22) et s'engrenant avec la couronne (14) ; un frein, avec lequel, de manière sélective, la roue solaire (24), la couronne (14) ou le porte-satellites (22) peuvent être freinés contre une rotation par rapport au carter de transmission (42) ; un embrayage, avec lequel, de manière sélective, parmi les éléments (24, 14, 22) constitués de la roue solaire (24), de la couronne (14) et du porte-satellites (22), deux éléments (24, 14, 22) peuvent être accouplés l'un à l'autre, afin d'empêcher un mouvement relatif entre les deux éléments (24, 14, 22) ; et un actionneur (40, 44, 46, 58), qui peut être accouplé au frein et à l'embrayage, l'actionneur (40, 44, 46, 58) pouvant être amené entre une position de freinage dans laquelle le frein est complètement embrayé et l'embrayage est complètement débrayé, une position d'embrayage dans laquelle l'embrayage est complètement embrayé et le frein est complètement débrayé, et une pluralité de positions intermédiaires, dans lesquelles au moins l'embrayage ou le frein est toujours au moins en partie embrayé, **caractérisée en ce que** l'embrayage présente un tambour d'embrayage (28) connecté de manière solidaire en rotation à la roue solaire (24) ; un plateau de frein d'embrayage (34) connecté fixement dans une portion de tambour (31) au tambour d'embrayage (28), avec une pluralité d'ouvertures (37) ; un plateau de pression d'embrayage (32) disposé de manière déplaçable par rapport au tambour d'embrayage (28) dans la portion de tambour (31) ; un disque d'embrayage (38) disposé entre le plateau de frein d'embrayage (34) et le plateau de pression d'embrayage (32) et connecté de manière solidaire en rotation à l'arbre de sortie (26) ; un ressort (60) disposé entre le tambour d'embrayage (28) et le plateau de pression d'embrayage (32) pour actionner l'embrayage, afin de précontraindre le plateau de pression d'embrayage (32) en appui contre le disque d'embrayage (38) ; et un plateau de débrayage (48) avec une pluralité de saillies (51), qui peuvent être embrayées de manière complémentaire dans la pluralité d'ouvertures (37) du plateau de frein d'embrayage (34) et qui peuvent s'étendre à travers elles, le plateau de débrayage (48) étant disposé dans le carter de transmission (42) à côté de l'actionneur (40, 44, 46, 58) de telle sorte que le plateau de débrayage (48) puisse être déplacé de manière ciblée avec l'actionneur (40, 44, 46, 58) afin de débrayer le plateau de pression d'embrayage (32) du disque d'embrayage (38), et **en ce que** le frein présente un collet de transmission (54) fixé rigidement sur le carter de transmission (42) et disposé entre le porte-satellites (22) et le tambour d'embrayage (28) ; et un ressort (64) disposé entre le porte-satellites (22) et le tambour d'embrayage (28) pour rappeler le frein, le ressort (64) précontraignant le tambour d'embrayage (28) et le plateau de pression d'embrayage (32) en appui avec le dispositif d'embrayage (38) de telle sorte que le tambour d'embrayage (28) soit déplacé en appui de friction avec le collet de transmission (54), quand l'actionneur (40, 44, 46, 58) déplace le plateau de pression d'embrayage (32).

2. Transmission planétaire selon la revendication 1, **caractérisée en ce que** l'actionneur (40, 44, 46, 58) est disposé de manière solidaire en rotation sur le carter de transmission (42) et/ou présente un piston (44).

3. Transmission planétaire selon la revendication 1 ou 2, **caractérisée en ce que** l'actionneur (40, 44, 46, 58) présente un piston (44) qui peut être déplacé entre une position activée et une position rentrée, le frein ou l'embrayage étant complètement embrayé dans la position activée, et le frein ou l'embrayage étant complètement débrayé dans la position rentrée.

4. Transmission planétaire selon l'une quelconque des revendications 1 à 3, **caractérisée en ce que** l'actionneur (40, 44, 46, 58) présente un ressort (58), qui est accouplé dans la direction de sa position rentrée pour précontraindre le piston (44).

5. Transmission planétaire selon l'une quelconque des revendications 1 à 4, **caractérisée en ce que** l'actionneur (40, 44, 46, 58) présente un canal de liquide (46) réalisé dans le carter de transmission (42), lequel est en liaison avec le piston (44), afin d'amener le piston (44) dans la position activée ou dans la position rentrée.

6. Transmission planétaire selon l'une quelconque des revendications 1 à 5, **caractérisée en ce que** l'actionneur (40, 44, 46, 58) présente des moyens de commande de l'alimentation de liquide hydraulique sous pression à une chambre hydraulique (40), afin d'amener le piston (44) dans la position activée et **en ce que** l'actionneur (40, 44, 46, 58) présente des moyens avec lesquels du liquide hydraulique peut être évacué de la chambre hydraulique (40) afin d'amener le piston (44) de préférence par le ressort (58) pour précontraindre le piston (44) dans la position rentrée.

7. Transmission planétaire selon l'une quelconque des revendications 1 à 6, **caractérisée en ce que** le ressort (60) pour l'actionnement de l'embrayage et/ou le ressort (64) pour rappeler le frein présentent une rondelle à plateau ou un ressort Belleville.

8. Transmission planétaire selon l'une quelconque des revendications 1 à 7, **caractérisée en ce que** l'embrayage présente des disques de friction (62B, 62A), qui sont fixés au plateau de frein d'embrayage (34) et au plateau de pression d'embrayage (32) et qui servent à l'appui par friction contre le disque d'embrayage (38).

9. Transmission planétaire selon l'une quelconque des revendications 1 à 8, **caractérisée en ce que** le frein présente une garniture de frein (52) qui est fixée sur le tambour d'embrayage (28) et qui sert à l'appui par friction contre le collet de transmission (54).
